# EUROPEAN PATENT APPLICATION

(11) **EP 4 553 571 A1**
(43) Date of publication of application: **14.05.2025**
(21) Application number: 23208474.9
(22) Date of filing: 08.11.2023
(51) Int. Cl.: G02F 1/35, H01S 3/13, H01S 5/0687, H04B 10/572

(54) **OPTICAL FREQUENCY COMB GENERATION**

(71) Applicant: NKT Photonics A/S, 3460 Birkerød (DK)
(72) Inventor: HENRIKSEN, Martin Romme, 3460 Birkerød (DK)
(74) Representative: Zacco Denmark A/S

(57) **Abstract**

An optical frequency comb generation system (100) comprising: a seed laser (102) to generate cw seed light at a seed light optical frequency; a microring resonator (104) having an operating resonance frequency, for generating an optical frequency comb; optical tap apparatus (106, 108) configured to form first and second tap signals corresponding to first and second spectral line of the optical frequency comb; an optical frequency reference (110) having a first and second reference resonance frequencies, configured to output reflected parts of the first and second tap signals having first and second reflected optical powers respectively; and frequency stabilization apparatus (120) configured to: determine a first difference between the optical frequency of the first spectral line and the first reference resonance frequency; determine a second difference between the optical frequency of the second spectral line and the second reference resonance frequency; and generate a control signal to change the seed light optical frequency and/or the MRR operating resonance frequency to reduce the first difference and/or the second difference.

## Description

### Technical Field

The invention relates to an optical frequency comb generation system.

### Background

Optical frequency combs consist of equally spaced discrete optical frequency components. At present, combs with wide spectra are usually generated by mode-locked lasers or dispersion-engineered resonators with third-order Kerr nonlinearity. An alternative method of comb production uses electro-optic (EO) phase modulation in a resonator with strong second-order nonlinearity.

Stabilization of the frequency comb line separation is usually performed by locking one of the modes/lines to an RF source or, in an octave spanning frequency comb, frequency doubling a line at one end of the comb and mixing it with the octave lower line at the other end, to generate an error signal based on the frequency difference (known as "f-2f self-reference").

The spectra of frequency combs generated in microring resonators do not, in most cases, extend across an entire octave, so the f-2f stabilization technique cannot be applied. In addition, at the 100GHz line spacing there is no RF source, therefore frequency locking to an RF source cannot be performed either.

### Summary

It is an object to provide an improved optical frequency comb generation system. It is a further object to enable improved frequency stability in optical frequency combs.

An aspect provides an optical frequency comb generation system comprising a seed laser, an optical microring resonator, MRR, optical tap apparatus, an optical frequency reference and frequency stabilization apparatus. The seed laser is operable to generate continuous wave, cw, seed light at a seed light optical frequency. The MRR has an operating resonance frequency and MRR is for generating an optical frequency comb using the cw seed light. The optical frequency comb has a bandwidth and comprises a plurality of spectral lines having respective optical frequencies. The optical tap apparatus is configured to form a first tap signal corresponding to a first spectral line of the optical frequency comb and to form a second tap signal corresponding to a second spectral line of the optical frequency comb. The optical frequency reference has a first reference resonance frequency and a second reference resonance frequency. The optical frequency reference is configured to receive the first tap signal having a first input optical power and to receive the second tap signal having a second input optical power. The optical frequency reference is configured to output a reflected part of the first tap signal having a first reflected optical power and to output a reflected part of the second tap signal having a second reflected optical power. The frequency stabilization apparatus is configured to determine, based on the first reflected optical power, a first difference between a respective optical frequency of the first spectral line and the first reference resonance frequency. The frequency stabilization apparatus is further configured to determine, based on the second reflected optical power, a second difference between a respective optical frequency of the second spectral line and the second reference resonance frequency. The frequency stabilization apparatus is further configured to generate at least one control signal configured to cause a change to at least one of the seed light optical frequency or the MRR operating resonance frequency to reduce at least one of the first difference or the second difference.

The system may enable improved frequency stabilization of an optical frequency comb generated using an MRR than is achievable by temperature control of the MRR. By stabilizing two spectral lines of the optical frequency comb to the same optical frequency reference a highly stable optical frequency comb and spectral line separation may be achieved. The system may enable frequency stabilization of both octave spanning and non-octave spanning optical frequency combs. The system may enable frequency stabilization of optical frequency combs without using f-2f self-referencing.

In an embodiment, the first spectral line is a central spectral line at the seed light optical frequency. This may enable the system to stabilize the central spectral line to the first optical reference frequency by adjusting the seed laser to change the seed light optical frequency.

In an embodiment, the optical tap apparatus comprises an optical splitter and optical filter apparatus. The optical splitter is configured to split off a portion of the cw seed light output from the seed laser to form the first tap signal. The optical filter apparatus is configured to split off a portion of the second spectral line from the optical frequency comb generated by the MRR to form the second tap signal. This may enable the system to stabilize the central spectral line to the first optical reference frequency by adjusting the seed laser to change the seed light optical frequency and to stabilize the second spectral line by adjusting the MRR operating resonance frequency.

In an embodiment, the optical filter apparatus comprises a fibre Bragg grating, FBG, and an optical router. The optical router is configured to route the optical frequency comb generated by the MRR to the FBG and is configured to output a reflected optical signal from the FBG as the second tap signal. The FBG is configured to reflect a portion of the second spectral line from the optical frequency comb and to transmit the rest of the optical frequency comb as an output optical frequency comb. FBGs can be fabricated with very narrow reflection bandwidths, which may advantageously enable the system to be used to stabilize optical frequency combs having a high repetition rate, i.e. a large comb frequency spacing.

In an embodiment, the optical tap apparatus comprises optical filter apparatus. The optical filter apparatus is configured to split of a first portion of the first spectral line from the optical frequency comb generated by the MRR to form the first tap signal and the optical filter apparatus is configured to split of a second portion of the second spectral line from the optical frequency comb generated by the MRR to form the second tap signal. This may enable the system to stabilize the optical frequency comb using any two of the spectral lines of the optical frequency comb.

In an embodiment, the optical filter apparatus comprises at least one fibre Bragg grating, FBG, an optical router and a wavelength demultiplexer. The optical router is configured to route the optical frequency comb generated by the MRR to the at least one FBG and to route reflected optical signals from the at least one FBG to the wavelength demultiplexer. The at least one FBG is configured to reflect a first portion of the first spectral line from the optical frequency comb and to reflect a second portion of the second spectral line from the optical frequency comb. The at least one FBG is further configured to transmit the rest of the optical frequency comb as an output optical frequency comb. The wavelength demultiplexer is configured to wavelength demultiplex the reflected first portion of the first spectral line and the reflected second portion of the second spectral line to form the first tap signal and the second tap signal respectively. FBGs can be fabricated with very narrow reflection bandwidths, which may advantageously enable the system to be used to stabilize optical frequency combs having a high repetition rate, i.e. a large comb frequency spacing.

In an embodiment, the optical frequency reference has a plurality of frequency resonances spaced over an optical spectrum. The frequency resonances have a line width in the range 50 kHz to 50 MHz and the optical spectrum has a bandwidth of at least one quarter of the optical frequency comb bandwidth. The first reference resonance frequency is a first said frequency resonance and the second reference resonance frequency is a second said frequency resonance. This may enable a plurality of the spectral lines of the optical frequency comb to have frequencies overlapping or close to frequency resonances of the optical frequency reference, and thus to be candidates for use as the first spectral line and the second spectral line.

In an embodiment, the optical frequency reference is a thermally stable, high-finesse optical resonator.

In an embodiment, the optical resonator is a Fabry-Perot resonator. A Fabry-Perot resonator, particularly a bulk optic FP etalon, has much better temperature stability than a MRR, hence this may enable much better frequency stabilization of the frequency comb than is achievable by temperature control of the MRR.

In an embodiment, the Fabry-Perot resonator is one of a bulk-optic Fabry-Perot etalon or an optical fibre Fabry-Perot resonator.

In an embodiment, the optical fibre Fabry-Perot resonator is a fibre Bragg grating Fabry-Perot resonator.

In an embodiment, the optical frequency reference is a reference gas cell. A reference gas cell advantageously provides an absolute frequency reference. The resonance frequency of gas molecules do not change with temperature, humidity or air pressure, thus a reference gas cell provides a very long-term-stable frequency reference.

In an embodiment, the frequency stabilization apparatus comprises a first optical modulator, a second optical modulator, optical detection apparatus and control circuitry. The first optical modulator is configured to apply a first phase modulation at a first modulation frequency, ω1, to the first tap signal. The second optical modulator is configured to apply a second phase modulation at a second modulation frequency, ω2, to the second tap signal, ω2 being different to ω1. The optical frequency reference is configured to receive the modulated first tap signal and the modulated second tap signal. The optical detection apparatus is configured to receive the reflected part of the modulated first tap signal and to output a first detection signal indicative of the first reflected optical power. The optical detection apparatus is additionally configured to receive the reflected part of the modulated second tap signal and to output a second detection signal indicative of the second reflected optical power. The control circuitry is configured to receive the first detection signal and the second detection signal, determine the first difference based on the first detection signal, determine the second difference based on the second detection signal, and generate the at least one control signal. This may enable active stabilization of the first spectral line and the second spectral line, and thus of the optical frequency comb line separation.

Modulation of the two tap signals at different frequencies may enable both to be processed and detected simultaneously.

In an embodiment, the frequency stabilization apparatus is operative to perform Pound Drever Hall, PDH, frequency locking.

Embodiments of the invention will now be described, by way of example only, with reference to the accompanying drawings.

### Brief Description of the drawings

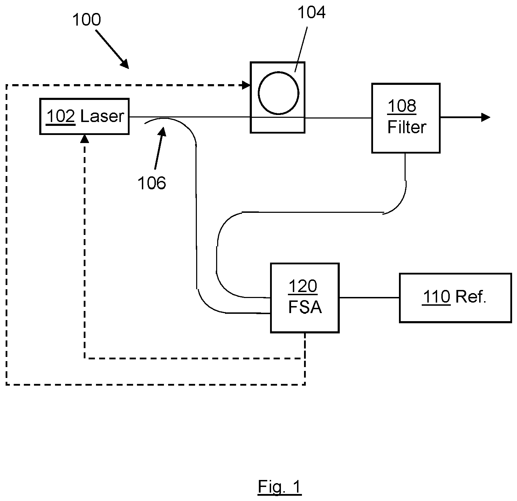

Figures 1 to 7 are block diagrams illustrating embodiments of optical frequency comb generation systems.

### Detailed description

The same reference numbers are used for corresponding features in different embodiments.

Referring to Figure 1, an embodiment provides an optical frequency comb generation system 100. The system 100 comprises a seed laser 102, an optical microring resonator, MRR, 104, optical tap apparatus 106, 108, an optical frequency reference 110, and frequency stabilization apparatus 120.

The seed laser 102 is operable to generate continuous wave, cw, seed light at a seed light optical frequency.

The MRR 104 has an operating resonance frequency and is for generating an optical frequency comb using the cw seed light. The optical frequency comb has a bandwidth and comprises a plurality of spectral lines having respective optical frequencies. As will be well known to the skilled person, an optical frequency comb is an optical spectrum, having a spectral bandwidth, consisting of equidistant optical lines across the spectral bandwidth, i.e. an optical spectrum consisting of equidistant optical frequency components; these are known as comb lines or comb frequencies. The intensity of comb lines can vary across an optical frequency comb.

The optical tap apparatus 106, 108 is configured to form a first tap signal corresponding to a first spectral line of the optical frequency comb and to form a second tap signal corresponding to a second spectral line of the optical frequency comb. The first spectral line is a central spectral line at the seed light optical frequency. The optical tap apparatus comprises an optical splitter 106 and optical filter apparatus 108. The optical splitter is configured to split off a portion of the cw seed light output from the seed laser to form the first tap signal. The optical filter apparatus is configured to split off a portion of the second spectral line from the optical frequency comb generated by the MRR to form the second tap signal.

The optical frequency reference 110 has a first reference resonance frequency and a second reference resonance frequency. The optical frequency reference is configured to receive the first tap signal and the second tap signal. The first tap signal has a first input optical power and the second tap signal has a second input optical power. The optical frequency reference is configured to output a reflected part of the first tap signal having a first reflected optical power and to output a reflected part of the second tap signal having a second reflected optical power. The proportion of the first tap signal that is reflected and output by the optical frequency reference, i.e. the proportion of the first input optical power that is reflected and output, varies dependent on how close the optical frequency of the first tap signal is to the first reference resonance frequency. Similarly, the proportion of the second tap signal that is reflected and output by the optical frequency reference, i.e. the proportion of the second input optical power that is reflected and output, varies dependent on how close the optical frequency of the second tap signal is to the second reference resonance frequency.

The frequency stabilization apparatus 120 is configured to receive the reflected part of the first tap signal and to receive the reflected part of the second tap signal. The frequency stabilization apparatus is configured to determine, based on the first reflected optical power, a first difference between the optical frequency of the first spectral line and the first reference resonance frequency. The frequency stabilization apparatus is further configured to determine, based on the second reflected optical power, a second difference between the optical frequency of the second spectral line and the second reference resonance frequency.

The frequency stabilization apparatus 120 is configured to generate a first control signal, sent to the laser 102, and/or a second control signal sent to the MRR 104. The first control signal is configured to cause a change to the seed light optical frequency to reduce the first difference, i.e. to bring the optical frequency of the first spectral line closer to the first reference resonance frequency of the reference cavity 110. The second control signal is configured to cause a change to the MRR operating resonance frequency to reduce the second difference, i.e. to bring the optical frequency of the second spectral line closer to the second reference resonance frequency of the reference cavity 110.

The frequency stabilization apparatus may operate iteratively to bring the optical frequency of the first spectral line into correspondence with the first reference resonance frequency, or to at least minimize the first difference with the first reference resonance frequency, and to bring the optical frequency of the second spectral line into correspondence with, or to at least minimize the second difference with, the second reference resonance frequency.

Since the seed light, at the seed light optical frequency, forms the central line of the frequency comb, this means that two different lines of the frequency comb are stabilized to the same reference cavity, thus the comb line separation is stabilized.

In an embodiment, the optical frequency reference 110 has a plurality of frequency resonances spaced over an optical spectrum. The frequency resonances have a line width in the range 50 kHz to 50 MHz and the optical spectrum has a bandwidth of at least 1/4 of the optical frequency comb bandwidth. The first reference resonance frequency is a first one of the frequency resonances and the second reference resonance frequency is a second, different, one of the frequency resonances.

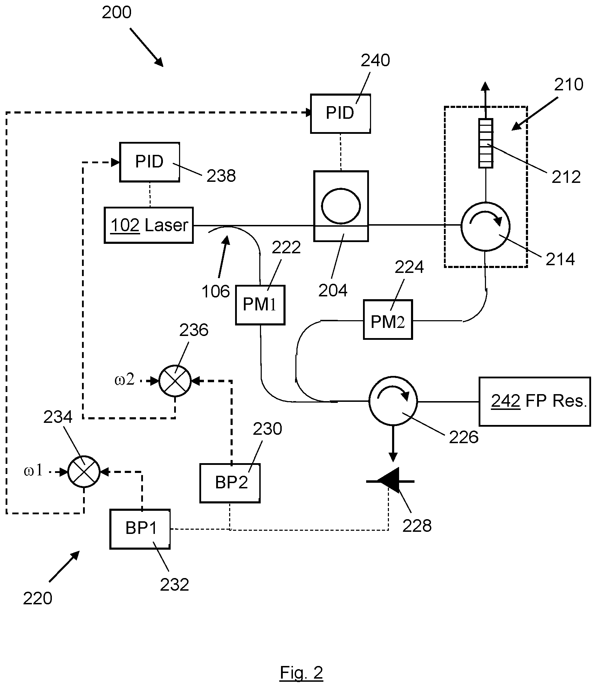

Referring to Figure 2, an embodiment provides an optical frequency comb generation system 200. The system 200 comprises a seed laser 102, an optical microring resonator, MRR, 204, optical tap apparatus 106, 210, an optical frequency reference 242, and frequency stabilization apparatus 220.

The frequency stabilization apparatus 220 comprises a first electro-optic modulator, EOM, 222, a second EOM 224, a photo detector 228, signal processing circuitry 230, 232, 234, 236 and control circuitry 238, 240. The frequency stabilization apparatus 220 is operative to perform Pound Drever Hall, PDH, frequency locking.

The seed laser 102 is operable to generate continuous wave, cw, seed light at a seed light optical frequency. The seed laser may, for example, be a single frequency fibre laser operable to generate cw seed light at a wavelength in the range 1535-1585 nm and having an output power in the range 100-200 mW. The seed laser may, for example, be a Koheras ADJUSTIK E15 or X15.

The MRR 204 is a thermally tunable MRR having a thermally tunable operating resonance frequency. The MRR is for generating an optical frequency comb using the cw seed light. The optical frequency comb comprises a plurality of spectral lines having respective optical frequencies.

The optical tap apparatus comprises an optical splitter 106 and optical filter apparatus 210. The optical splitter is configured to split off 1% of the cw seed light output from the seed laser to form the first tap signal. Since the seed light forms the central spectral line of the frequency comb, the first tap signal thus corresponds to the central spectral line of the optical frequency comb.

The first EOM 222 is configured to receive the first tap signal from the optical splitter 106. The first EOM is configured to apply a first phase modulation at a first modulation frequency, ω1, to the first tap signal. The first modulation frequency, ω1, may, for example, be 10 MHz.

The optical filter apparatus 210 comprises a fibre Bragg grating, FBG, 212 and an optical router, in this example an optical circulator 214. The optical circulator is configured to route the optical frequency comb generated by the MRR to the FBG and is configured to output a reflected optical signal from the FBG as the second tap signal. The FBG is configured to reflect 1% of the second spectral line from the optical frequency comb and to transmit the other 99% of the second spectral line and the other spectral lines of the optical frequency comb as an output optical frequency comb. The second tap signal thus corresponds to a second spectral line of the optical frequency comb.

The second EOM 224 is configured to receive the second tap signal output from the optical circulator 214. The second EOM is configured to apply a second phase modulation at a second modulation frequency, ω2, to the second tap signal. ω2 is different to ω1; ω2 is sufficiently separated from ω1 to be distinguishable and is not a harmonic of ω1. The second modulation frequency, ω2, may, for example, be 13 MHz.

The optical frequency reference 242 is a thermally stable, high-finesse optical resonator. In this embodiment, the optical frequency reference is a bulk-optic Fabry-Perot, FP, resonator.

The FP resonator is configured to receive the modulated first tap signal from the first EOM 222 and to receive the modulated second tap signal from the second EOM 224. The FP resonator 242 has a cavity free spectral range, FSR. The FP resonator has a first reference resonance frequency and a second reference resonance frequency. The first reference resonance frequency is the cavity FSR or a first multiple of the FSR. The second reference resonance frequency is a second multiple of the FSR; the second multiple of the FSR is different to the first multiple of the FSR in the case where the first reference resonance frequency is a first multiple of the FSR.

The modulated first tap signal received at the FP resonator has a first input optical power and the modulated second tap signal received at the FP resonator has a second input optical power. The FP resonator is configured to output a reflected part of the first tap signal having a first reflected optical power and to output a reflected part of the second tap signal having a second reflected optical power. The proportion of each tap signal that is reflected and output by the FP resonator, i.e. the proportion of each input optical power that is reflected and output, varies dependent on how close the optical frequency of each tap signal is to the respective reference resonance frequency. That is to say, the intensity of the reflected signal indicates how close the respective tap signal optical frequency matches the FP resonator FSR or multiple thereof - this is the Pound-Drever-Hall (PDH) technique.

The FP resonator acts as a frequency reference for both the seed laser 102 and a selected spectral line of the frequency comb output from the MRR - since the original laser frequency forms the central line of the frequency comb, this means that two different lines of the frequency comb are stabilized to the same FP resonator, thus the comb line separation is stabilized. An FP resonator, particularly a bulk optic FP resonator, has much better temperature stability than a MRR. Thus this embodiment enables much better frequency stabilization of the frequency comb than is acheiveable by temperature control of the MRR.

The optical detection apparatus comprises a photo detector 228, a first electrical bandpass filter, BP1, 232, a second electrical bandpass filter, BP2, 234, a first electrical mixer 234 and a second electrical mixer 236.

The photo detector 228 is configured to receive the reflected part of the first tap signal and the reflected part of the second tap signal. The photo detector 228 is configured to output a detected voltage signal comprising a first component at ω1 and a second component at ω2. The detected voltage signal is power split and respective parts are sent to the bandpass filters 230, 232. BP1 is configured to pass voltage signals at ω1 and BP2 is configured to pass voltage signals at ω2. The first mixer is configured to demodulate the voltage signal at ω1 passed by BP1, to form a first detection signal indicative of the first reflected optical power. The second mixer is configured to demodulate the voltage signal at ω2 passed by BP2, to form a second detection signal indicative of the second reflected optical power.

The control circuitry comprises a first proportional-integral-derivative, PID, controller 238 and a second PID controller 240.

The first PID controller is configured to receive the first detection signal, determine a first difference between the seed light optical frequency, i.e. optical frequency of the first spectral line, and the first reference resonance frequency. The first PID controller is configured to generate a first control signal that is sent to the laser 102. The first control signal is configured to cause a change to the seed light optical frequency output by the laser to reduce the first difference, i.e. to bring the optical frequency of the first spectral line closer to the first reference resonance frequency of the reference cavity 242.

The second PID controller 240 is configured to receive the second detection signal, determine a second difference between the optical frequency of the second spectral line and the second reference resonance frequency. The second PID controller is configured to generate a second control signal that is sent to the MRR 204. The second control signal is configured to cause the MRR to thermally tune its operating resonance frequency, thereby causing a change to the optical frequency comb, and thus to the optical frequency of the second spectral line, to reduce the second difference, i.e. to bring the optical frequency of the second spectral line closer to the second reference resonance frequency of the reference cavity 242.

The frequency stabilization apparatus may operate iteratively to bring the optical frequency of the first spectral line into correspondence with the first reference resonance frequency, or to at least minimize the first difference with the first reference resonance frequency, and to bring the optical frequency of the second spectral line into correspondence with, or to at least minimize the second difference with, the second reference resonance frequency.

In another embodiment, the optical frequency reference is a fibre optical Fabry-Perot resonator, such as an FBG Fabry-Perot resonator.

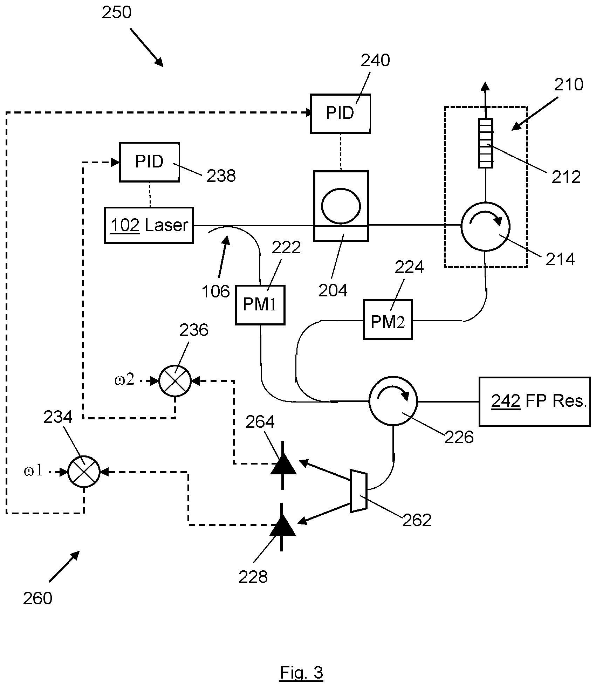

Referring to Figure 3, an embodiment provides an optical frequency comb generation system 250. The system 250 comprises a seed laser 102, an optical microring resonator, MRR, 204, optical tap apparatus 106, 210, an optical frequency reference 242, and frequency stabilization apparatus 260.

The frequency stabilization apparatus 220 comprises a first electro-optic modulator, EOM, 222, a second EOM 224, optical detection apparatus 228, 262, 264, signal processing circuitry 234, 236 and control circuitry 238, 240. The frequency stabilization apparatus 220 is operative to perform Pound Drever Hall, PDH, frequency locking.

In this embodiment, the optical detection apparatus comprises a wavelength demultiplexer 262, a first photodetector 228 and a second photo detector 264.

The wavelength demultiplexer is configured to demultiplex the reflected part of the first tap signal from the reflected part of the second tap signal. The first photo detector 228 is configured to receive the reflected part of the first tap signal. The second photo detector 264 is configured to receive the reflected part of the second tap signal. The first photo detector 228 is configured to output a first voltage signal modulated at ω1. The second photo detector 264 is configured to output a second voltage signal modulated at ω2. The first mixer 234 is configured to demodulate the first voltage signal at ω1, to form a first detection signal indicative of the first reflected optical power. The second mixer 236 is configured to demodulate the second voltage signal at ω2, to form a second detection signal indicative of the second reflected optical power.

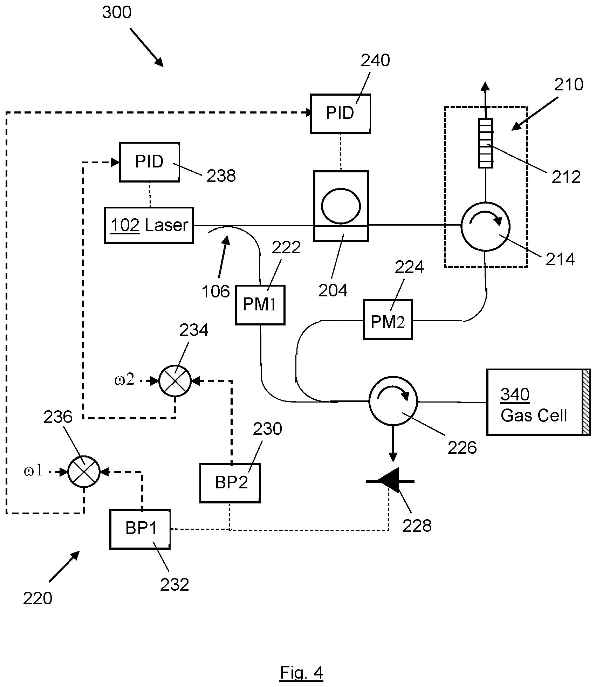

Referring to Figure 4, an embodiment provides an optical frequency comb generation system 200. The system 300 comprises a seed laser 102, an optical microring resonator, MRR, 204, optical tap apparatus 106, 210, an optical frequency reference 340, and frequency stabilization apparatus 220.

The optical frequency reference in this embodiment is a reference gas cell 340, for example an Acetylene (C2H2) double-pass gas cell. The gas cell 340 is configured to receive the modulated first tap signal from the first EOM 222 and to receive the modulated second tap signal from the second EOM 224. The gas cell 340 has a plurality of hyperfine absorption bands at respective optical frequencies. A first absorption band is selected as a reference resonance frequency and a second, different, absorption band is selected as a second reference resonance frequency.

The modulated first tap signal received at the gas cell 340 has a first input optical power and the modulated second tap signal received at the gas cell has a second input optical power. The gas cell is configured to output a reflected part of the first tap signal having a first reflected optical power and to output a reflected part of the second tap signal having a second reflected optical power. The proportion of each tap signal that is reflected and output by the gas cell, i.e. the proportion of each input optical powerthat is reflected and output, varies dependent on how close the optical frequency of each tap signal is to the respective reference resonance frequency. That is to say, the intensity of the reflected signal indicates how close the respective tap signal optical frequency matches that of the respective absorption band; the closer the tap signal is to the respective absorption band, the more of the tap signal will be absorbed and the lower the reflected optical power will be - this is the Pound-Drever-Hall (PDH) technique.

The gas cell acts as a frequency reference for both the seed laser 102 and a selected spectral line of the frequency comb output from the MRR - since the original laser frequency forms the central line of the frequency comb, this means that two different lines of the frequency comb are stabilized to the same gas cell, thus the comb line separation is stabilized.

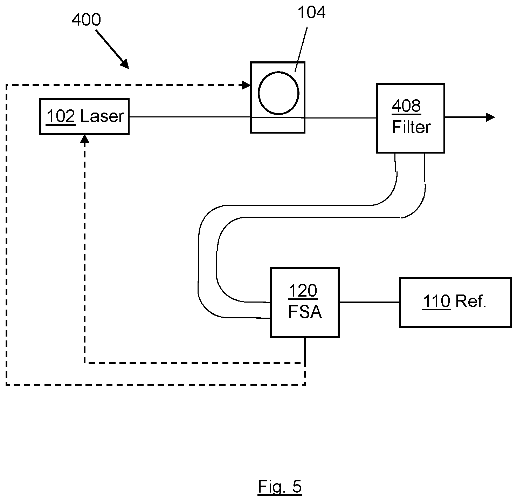

Referring to Figure 5, an embodiment provides an optical frequency comb generation system 400. The system 400 comprises a seed laser 102, an optical microring resonator, MRR, 104, an optical frequency reference 110, optical tap apparatus 408, and frequency stabilization apparatus 120.

The seed laser 102 is operable to generate continuous wave, cw, seed light at a seed light optical frequency.

The MRR 104 has an operating resonance frequency and is for generating an optical frequency comb using the cw seed light. The optical frequency comb comprises a plurality of spectral lines having respective optical frequencies.

The optical tap apparatus comprises optical filter apparatus 408. The optical filter apparatus is configured to split of a first portion of a first spectral line from the optical frequency comb generated by the MRR to form the first tap signal. The optical filter apparatus 408 is further configured to split of a second portion of a second spectral line from the optical frequency comb generated by the MRR to form the second tap signal.

The optical filter apparatus can be configured to split off portions of any two spectral lines of the optical frequency comb output from the MRR. The first spectral line may be the central spectral line or may be another spectral line.

The optical frequency reference 110 has a first reference resonance frequency and a second reference resonance frequency. The optical frequency reference is configured to receive the first tap signal and the second tap signal. The first tap signal has a first input optical power and the second tap signal has a second input optical power. The optical frequency reference is configured to output a reflected part of the first tap signal having a first reflected optical power and to output a reflected part of the second tap signal having a second reflected optical power. The proportion of the first tap signal that is reflected and output by the optical frequency reference, i.e. the proportion of the first input optical power that is reflected and output, varies dependent on how close the optical frequency of the first tap signal is to the first reference resonance frequency. Similarly, the proportion of the second tap signal that is reflected and output by the optical frequency reference, i.e. the proportion of the second input optical power that is reflected and output, varies dependent on how close the optical frequency of the second tap signal is to the second reference resonance frequency.

The frequency stabilization apparatus 120 is configured to receive the reflected part of the first tap signal and to receive the reflected part of the second tap signal. The frequency stabilization apparatus is configured to determine, based on the first reflected optical power, a first difference between the optical frequency of the first spectral line and the first reference resonance frequency. The frequency stabilization apparatus is further configured to determine, based on the second reflected optical power, a second difference between the optical frequency of the second spectral line and the second reference resonance frequency.

The frequency stabilization apparatus 120 is configured to generate a first control signal, sent to the laser 102, and/or a second control signal sent to the MRR 104. The first control signal is configured to cause a change to the seed light optical frequency to reduce the first difference, i.e. to bring the optical frequency of the first spectral line closer to the first reference resonance frequency of the reference cavity 110. The second control signal is configured to cause a change to the MRR operating resonance frequency to reduce the second difference, i.e. to bring the optical frequency of the second spectral line closer to the second reference resonance frequency of the reference cavity 110.

The frequency stabilization apparatus may operate iteratively to bring the optical frequency of the first spectral line into correspondence with the first reference resonance frequency, or to at least minimize the first difference with the first reference resonance frequency, and to bring the optical frequency of the second spectral line into correspondence with, or to at least minimize the second difference with, the second reference resonance frequency.

Since the seed light, at the seed light optical frequency, forms the central line of the frequency comb, this means that two different lines of the frequency comb are stabilized to the same reference cavity, thus the comb line separation is stabilized.

In an embodiment, the optical frequency reference 110 has a plurality of frequency resonances spaced over an optical spectrum. The frequency resonances have a line width in the range 50 kHz to 50 MHz and the optical spectrum has a bandwidth of at least 1/4 of the optical frequency comb bandwidth . The first reference resonance frequency is a first one of the frequency resonances and the second reference resonance frequency is a second, different, one of the frequency resonances.

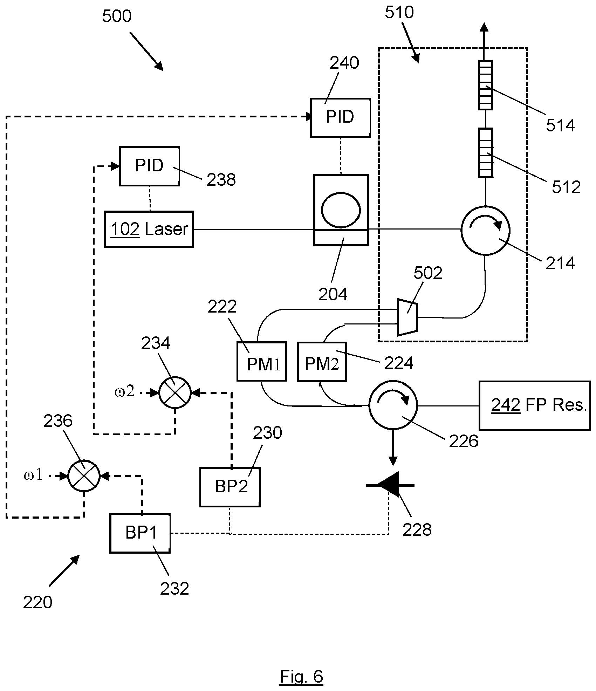

Referring to Figure 6, an embodiment provides an optical frequency comb generation system 500. The system 500 comprises a seed laser 102, an optical microring resonator, MRR, 204, optical tap apparatus 510, an optical frequency reference 242, and frequency stabilization apparatus 220.

The frequency stabilization apparatus 220 comprises a first electro-optic modulator, EOM, 222, a second EOM 224, a photo detector 228, signal processing circuitry 230, 232, 234, 236 and control circuitry 238, 240. The frequency stabilization apparatus 220 is operative to perform Pound Drever Hall, PDH, frequency locking.

The seed laser 102 is operable to generate continuous wave, cw, seed light at a seed light optical frequency. The seed laser may, for example, be a single frequency fibre laser operable to generate cw seed light at a wavelength in the range 1535-1585 nm and having an output power in the range 100-200 mW. The seed laser may, for example, be a Koheras ADJUSTIK E15 or X15.

The MRR 204 is a thermally tunable MRR having a thermally tunable operating resonance frequency. The MRR is for generating an optical frequency comb using the cw seed light. The optical frequency comb comprises a plurality of spectral lines having respective optical frequencies.

The optical tap apparatus comprises optical filter apparatus 510 comprising a first fibre Bragg grating, FBG, 512, a second FBG 514, an optical circulator 214, and a wavelength demultiplexer 502. The optical circulator is configured to route the optical frequency comb generated by the MRR to the FBGs and to route reflected optical signals from the FBGs to the wavelength demultiplexer.

The first FBG 512 is configured to reflect 1% of the first spectral line from the optical frequency comb and to transmit the other 99% of the first spectral line and the other spectral lines of the optical frequency comb to the second FBG. The second FBG 514 is configured to reflect 1% of the second spectral line and to transmit the other 99% of the second spectral line and the other spectral lines of the optical frequency comb as an output optical frequency comb.

As an alternative to using two FBGs, a single FBG may be used having a spectral profile with two reflection bands configured to reflect 1% of first spectral line and 1% of second spectral line respectively.

The wavelength demultiplexer 502 is configured to wavelength demultiplex the reflected 1% of the first spectral line and the reflected 1% of the second spectral line to form the first tap signal and the second tap signal respectively.

The first EOM 222 is configured to receive the first tap signal from the wavelength demultiplexer. The first EOM is configured to apply a first phase modulation at a first modulation frequency, ω1, to the first tap signal. The first modulation frequency, ω1, may, for example, be 10 MHz.

The second EOM 224 is configured to receive the second tap signal the wavelength demultiplexer. The second EOM is configured to apply a second phase modulation at a second modulation frequency, ω2, to the second tap signal. ω2 is different to ω1; ω2 is sufficiently separated from ω1 to be distinguishable and is not a harmonic of ω1. The second modulation frequency, ω2, may, for example, be 13 MHz.

The optical frequency reference 242 is a thermally stable, high-finesse optical resonator. In this embodiment, the optical frequency reference is a bulk-optic Fabry-Perot, FP, resonator.

The FP resonator is configured to receive the modulated first tap signal from the first EOM 222 and to receive the modulated second tap signal from the second EOM 224. The FP resonator 242 has a cavity free spectral range, FSR. The FP resonator has a first reference resonance frequency and a second reference resonance frequency. The first reference resonance frequency is the cavity FSR or a first multiple of the FSR. The second reference resonance frequency is a second multiple of the FSR; the second multiple of the FSR is different to the first multiple of the FSR in the case where the first reference resonance frequency is a first multiple of the FSR.

The modulated first tap signal received at the FP resonator has a first input optical power and the modulated second tap signal received at the FP resonator has a second input optical power. The FP resonator is configured to output a reflected part of the first tap signal having a first reflected optical power and to output a reflected part of the second tap signal having a second reflected optical power. The proportion of each tap signal that is reflected and output by the FP resonator, i.e. the proportion of each input optical power that is reflected and output, varies dependent on how close the optical frequency of each tap signal is to the respective reference resonance frequency. That is to say, the intensity of the reflected signal indicates how close the respective tap signal optical frequency matches the FP resonator FSR or multiple thereof - this is the Pound-Drever-Hall (PDH) technique.

The FP resonator acts as a frequency reference for both the seed laser 102 and a selected spectral line of the frequency comb output from the MRR - since the original laser frequency forms the central line of the frequency comb, this means that two different lines of the frequency comb are stabilized to the same FP resonator, thus the comb line separation is stabilized. An FP resonator, particularly a bulk optic FP resonator, has much better temperature stability than a MRR. Thus this embodiment enables much better frequency stabilization of the frequency comb than is acheiveable by temperature control of the MRR.

The optical detection apparatus comprises a photo detector 228, a first electrical bandpass filter, BP1, 232, a second electrical bandpass filter, BP2, 234, a first electrical mixer 234 and a second electrical mixer 236.

The photo detector 228 is configured to receive the reflected part of the first tap signal and the reflected part of the second tap signal. The photo detector 228 is configured to output a detected voltage signal comprising a first component at ω1 and a second component at ω2. The detected voltage signal is power split and respective parts are sent to the bandpass filters 230, 232. BP1 is configured to pass voltage signals at ω1 and BP2 is configured to pass voltage signals at ω2. The first mixer is configured to demodulate the voltage signal at ω1 passed by BP1, to form a first detection signal indicative of the first reflected optical power. The second mixer is configured to demodulate the voltage signal at ω2 passed by BP2, to form a second detection signal indicative of the second reflected optical power.

The control circuitry comprises a first proportional-integral-derivative, PID, controller 238 and a second PID controller 240.

The first PID controller is configured to receive the first detection signal, determine a first difference between the seed light optical frequency, i.e. optical frequency of the first spectral line, and the first reference resonance frequency. The first PID controller is configured to generate a first control signal that is sent to the laser 102. The first control signal is configured to cause a change to the seed light optical frequency output by the laser to reduce the first difference, i.e. to bring the optical frequency of the first spectral line closer to the first reference resonance frequency of the reference cavity 242.

The second PID controller 240 is configured to receive the second detection signal, determine a second difference between the optical frequency of the second spectral line and the second reference resonance frequency. The second PID controller is configured to generate a second control signal that is sent to the MRR 204. The second control signal is configured to cause the MRR to thermally tune its operating resonance frequency, thereby causing a change to the optical frequency comb, and thus to the optical frequency of the second spectral line, to reduce the second difference, i.e. to bring the optical frequency of the second spectral line closer to the second reference resonance frequency of the reference cavity 242.

The frequency stabilization apparatus may operate iteratively to bring the optical frequency of the first spectral line into correspondence with the first reference resonance frequency, or to at least minimize the first difference with the first reference resonance frequency, and to bring the optical frequency of the second spectral line into correspondence with, or to at least minimize the second difference with, the second reference resonance frequency.

In another embodiment, the optical frequency reference is a fibre optical Fabry-Perot resonator, such as an FBG Fabry-Perot resonator.

As an alternative to the frequency stabilization apparatus 220, frequency stabilization apparatus 260 including optical detection apparatus comprising a wavelength demultiplexer 262, a first photodetector 228 and a second photo detector 264, as described above with reference to Figure 3, may be used.

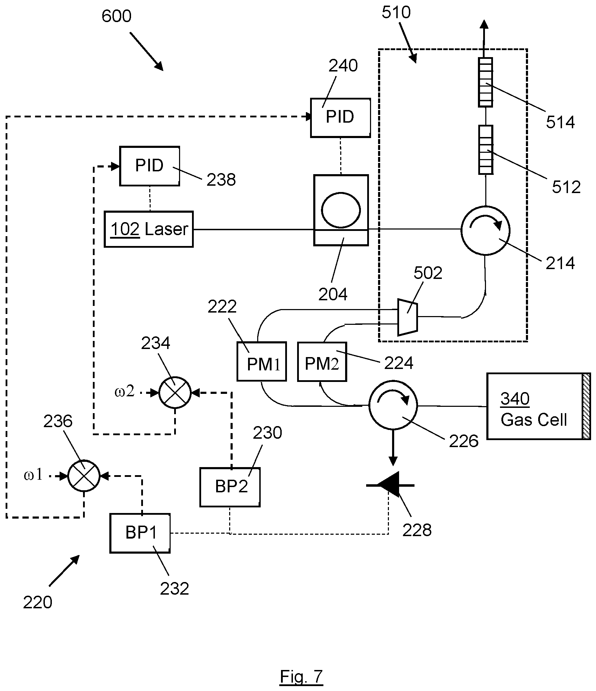

Referring to Figure 7, an embodiment provides an optical frequency comb generation system 600, similar to the system 500 of Figure 6. The system 500 comprises a seed laser 102, an optical microring resonator, MRR, 204, optical filter apparatus 510, an optical frequency reference 340, and frequency stabilization apparatus 220.

The optical frequency reference in this embodiment is a reference gas cell 340, for example an Acetylene (C2H2) double-pass gas cell. The gas cell 340 is configured to receive the modulated first tap signal from the first EOM 222 and to receive the modulated second tap signal from the second EOM 224. The gas cell 340 has a plurality of hyperfine absorption bands at respective optical frequencies. A first absorption band is selected as a reference resonance frequency and a second, different, absorption band is selected as a second reference resonance frequency.

The modulated first tap signal received at the gas cell 340 has a first input optical power and the modulated second tap signal received at the gas cell has a second input optical power. The gas cell is configured to output a reflected part of the first tap signal having a first reflected optical power and to output a reflected part of the second tap signal having a second reflected optical power. The proportion of each tap signal that is reflected and output by the gas cell, i.e. the proportion of each input optical powerthat is reflected and output, varies dependent on how close the optical frequency of each tap signal is to the respective reference resonance frequency. That is to say, the intensity of the reflected signal indicates how close the respective tap signal optical frequency matches that of the respective absorption band; the closer the tap signal is to the respective absorption band, the more of the tap signal will be absorbed and the lower the reflected optical power will be - this is the Pound-Drever-Hall (PDH) technique.

The gas cell acts as a frequency reference for both the seed laser 102 and a selected spectral line of the frequency comb output from the MRR - since the original laser frequency forms the central line of the frequency comb, this means that two different lines of the frequency comb are stabilized to the same gas cell, thus the comb line separation is stabilized.

As an alternative to using two FBGs, a single FBG may be used having a spectral profile with two reflection bands configured to reflect 1% of first spectral line and 1 % of second spectral line respectively.

As an alternative to the frequency stabilization apparatus 220, frequency stabilization apparatus 260 including optical detection apparatus comprising a wavelength demultiplexer 262, a first photodetector 228 and a second photo detector 264, as described above with reference to Figure 3, may be used.

## Claims

1. An optical frequency comb generation system (100, 200) comprising:
a seed laser (102) operable to generate continuous wave, cw, seed light at a seed light optical frequency;
an optical microring resonator, MRR, (104, 204) having an operating resonance frequency, for generating an optical frequency comb using the cw seed light, the optical frequency comb having a bandwidth and comprising a plurality of spectral lines having respective optical frequencies;
optical tap apparatus (106, 108, 210, 402, 408, 510) configured to form a first tap signal corresponding to a first spectral line of the optical frequency comb and to form a second tap signal corresponding to a second spectral line of the optical frequency comb;
an optical frequency reference (110, 242, 340) having a first reference resonance frequency and a second reference resonance frequency, wherein the optical frequency reference is configured to receive the first tap signal having a first input optical power and the second tap signal having a second input optical power, and to output a reflected part of the first tap signal having a first reflected optical power and to output a reflected part of the second tap signal having a second reflected optical power; and
frequency stabilization apparatus (120, 220) configured to:
determine, based on the first reflected optical power, a first difference between a respective optical frequency of the first spectral line and the first reference resonance frequency;
determine, based on the second reflected optical power, a second difference between a respective optical frequency of the second spectral line and the second reference resonance frequency; and
generate at least one control signal configured to cause a change to at least one of the seed light optical frequency or the MRR operating resonance frequency to reduce at least one of the first difference or the second difference.

2. The system of claim 1, wherein the first spectral line is a central spectral line at the seed light optical frequency.

3. The system of claim 2, wherein the optical tap apparatus comprises an optical splitter (106) and optical filter apparatus (108, 210), wherein the optical splitter is configured to split off a portion of the cw seed light output from the seed laser to form the first tap signal and the optical filter apparatus is configured to split off a portion of the second spectral line from the optical frequency comb generated by the MRR to form the second tap signal.

4. The system of claim 3, wherein the optical filter apparatus (210) comprises a fibre Bragg grating, FBG, (212) and an optical router (214), wherein the optical router is configured to route the optical frequency comb generated by the MRR to the FBG and is configured to output a reflected optical signal from the FBG as the second tap signal, and wherein the FBG is configured to reflect a portion of the second spectral line from the optical frequency comb and to transmit the rest of the optical frequency comb as an output optical frequency comb.

5. The system of claim 1, wherein the optical tap apparatus comprises optical filter apparatus (408, 510) configured to split of a first portion of the first spectral line from the optical frequency comb generated by the MRR to form the first tap signal and configured to split of a second portion of the second spectral line from the optical frequency comb generated by the MRR to form the second tap signal.

6. The system of claim 5, wherein the optical filter apparatus (510) comprises at least one fibre Bragg grating, FBG, (512), an optical router (214) and a wavelength demultiplexer (502), wherein:
the optical router is configured to route the optical frequency comb generated by the MRR to the at least one FBG and to route reflected optical signals from the at least one FBG to the wavelength demultiplexer;
the at least one FBG is configured to reflect a first portion of the first spectral line from the optical frequency comb and to reflect a second portion of the second spectral line from the optical frequency comb, and the at least one FBG is configured to transmit the rest of the optical frequency comb as an output optical frequency comb; and
the wavelength demultiplexer is configured to wavelength demultiplex the reflected first portion of the first spectral line and the reflected second portion of the second spectral line to form the first tap signal and the second tap signal respectively.

7. The system of any one of the preceding claims, wherein the optical frequency reference (110, 242, 340) has a plurality of frequency resonances spaced over an optical spectrum, wherein the frequency resonances have a line width in the range 50 kHz to 50 MHz and the optical spectrum has a bandwidth of at least one quarter of the optical frequency comb bandwidth, and wherein the first reference resonance frequency is a first said frequency resonance and the second reference resonance frequency is a second said frequency resonance.

8. The system of claim 7, wherein the optical frequency reference is a thermally stable, high-finesse optical resonator (242).

9. The system of claim 8, wherein the optical resonator is a Fabry-Perot resonator (242).

10. The system of claim 9, wherein the Fabry-Perot resonator (242) is one of a bulk-optic Fabry-Perot etalon or an optical fibre Fabry-Perot resonator.

11. The system of claim 10, wherein the optical fibre Fabry-Perot resonator is a fibre Bragg grating Fabry-Perot resonator.

12. The system of claim 7, wherein the optical frequency reference is a reference gas cell (340).

13. The system of any preceding claim, wherein the frequency stabilization apparatus (220) comprises:
a first optical modulator (222) configured to apply a first phase modulation at a first modulation frequency, ω1, to the first tap signal;
a second optical modulator (224) configured to apply a second phase modulation at a second modulation frequency, ω2, to the second tap signal, ω2 being different to ω1;
optical detection apparatus (228, 230, 232, 234, 236); and
control circuitry (238, 242),
wherein the optical frequency reference (110, 242, 340) is configured to receive the modulated first tap signal and the modulated second tap signal;
the optical detection apparatus is configured to receive the reflected part of the modulated first tap signal and to output a first detection signal indicative of the first reflected optical power, and configured to receive the reflected part of the modulated second tap signal and to output a second detection signal indicative of the second reflected optical power; and
the control circuitry is configured to:
receive the first detection signal and the second detection signal;
determine the first difference based on the first detection signal;
determine the second difference based on the second detection signal; and
generate the at least one control signal.

14. The system of claim 13, wherein the frequency stabilization apparatus is operative to perform Pound Drever Hall, PDH, frequency locking.
